# EUROPÄISCHE PATENTSCHRIFT

(11) **EP 2 641 322 B1**
(45) Veröffentlichungstag und Bekanntmachung des Hinweises auf die Patenterteilung: **13.04.2016**
(21) Anmeldenummer: 11704572.4
(22) Anmeldetag: 08.02.2011
(51) Int. Cl.: H02M 5/27, H02M 5/297, H02M 7/48

(54) **ENERGIEVERSORGUNGSSYSTEM MIT EINEM MULTIPHASENMATRIXUMRICHTER UND VERFAHREN ZUM BETRIEB DESSELBEN**
ENERGY SUPPLY SYSTEM WITH A MULTIPHASE MATRIX CONVERTER AND METHOD FOR ITS OPERATION
SYSTÈME D'ALIMENTATION D'ENERGIE AVEC UN CONVERTISSEUR MULTIPHASE DE MATRICE ET UN PROCEDE POUR SON OPERATION

(43) Veröffentlichungstag der Anmeldung: 25.09.2013
(73) Patentinhaber: Siemens Aktiengesellschaft, 80333 München (DE)
(72) Erfinder: EDELBROCK, Ralf, 23743 Grömitz (DE); PFEIFER, Markus, 90455 Nürnberg (DE)
(86) Internationale Anmeldenummer: PCT/EP2011/051789
(87) Internationale Veröffentlichungsnummer: WO 2012/107077

(56) Entgegenhaltungen:
- WO-A1-2005/105511
- DE-U1-202005 001 686
- BLAABJERG F ET AL: "A Review of Single-Phase Grid-Connected Inverters for Photovoltaic Modules", IEEE TRANSACTIONS ON INDUSTRY APPLICATIONS, IEEE SERVICE CENTER, PISCATAWAY, NJ, US, Bd. 41, Nr. 5, 1. September 2005 (2005-09-01), Seiten 1292-1306, XP011139229, ISSN: 0093-9994, DOI: 10.1109/TIA.2004.841166
- MARTINS D C ET AL: "Grid connected PV system using two energy processing stages", CONFERENCE RECORD OF THE IEEE PHOTOVOLTAIC SPECIALISTS CONFERENCE 2002 INSTITUTE OF ELECTRICAL AND ELECTRONICS ENGINEERS INC. US; [IEEE PHOTOVOLTAIC SPECIALISTS CONFERENCE],, Bd. CONF. 29, 19. Mai 2002 (2002-05-19), Seiten 1649-1652, XP010666604, DOI: 10.1109/PVSC.2002.1190933 ISBN: 978-0-7803-7471-3

## Beschreibung

Die Erfindung betrifft ein Energieversorgungssystem mit einem Multiphasenmatrixumrichter, der mehrere Eingangsklemmen, mehrere Ausgangsklemmen und mehrere Teilumrichter aufweist, wobei die Eingangsklemmen jeweils über bidirektionale Schalter der Teilumrichter mit den Ausgangsklemmen verbunden sind.

Außerdem betrifft die Erfindung ein Verfahren zum Betrieb eines Energieversorgungssystems mit einem Multiphasenmatrixumrichter.

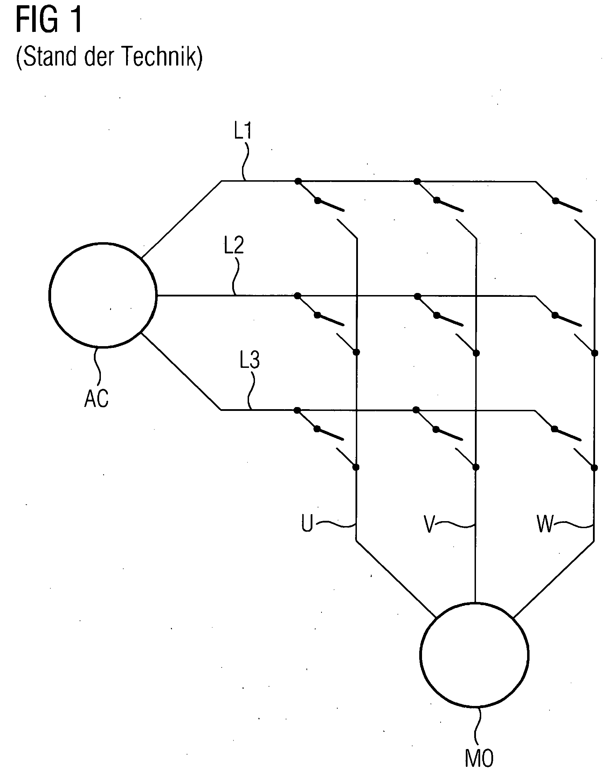

Ein derartiges Energieversorgungssystem mit einem Multiphasenmatrixumrichter ist in der DE 20 2005 001 686 U1 offenbart. Dabei ist der Matrixumrichter in bekannter Weise an ein Wechselstromsystem angebunden, wie beispielsweise in Figur 1 dargestellt. Bei solchen Anlagen müssen in der Netzeinspeisung teure Netzfilter zur Reduzierung der Oberschwingungen vorgesehen werden, die aufgrund ihrer Verluste den Wirkungs-grad verschlechtern.

Bei Energieversorgungssystemen mit Photovoltaikanlagen als Gleichspannungsquelle muss die Gleichspannung zum Einspeisen in das öffentliche Stromnetz, z.B. das 380V-Netz, erst in eine netzsynchrone Wechselspannung umgewandelt werden. Hierzu dienen netzgeführte Wechselrichter.

Große Photovoltaikfelder sind in Einzelstränge unterteilt. Dabei werden zurzeit Strangspannungen bis zu 1.000V als Eingangsspannung für einen nachgeschalteten Umrichter angewandt. Es kann bei solchen Photovoltaikanlagen zu unerwünschtem Schwingverhalten aufgrund der in den über das Photovoltaikfeld verteilten Anlagekapazitäten gespeicherten schwankenden Ladung kommen .

Zur Vermeidung dieses Problems sowie anderer Nachteile dieser Ausführungsform werden mehrere Stränge eines Photovoltaikfeldes parallel geschaltet und die Energie über größere Kabelquerschnitte zu einem zentralen Wechselrichter befördert. Mehrere solcher Wechselrichter werden über einen Mittelspannungs- oder Hochspannungstransformator an das Netz angeschlossen. Zur Vermeidung von Resonanzen dienen HF-Transformatoren, wie aus der veröffentlichung "A review of single-phase grid-connected inverters for photoroltaic modules" aus dem jahre 2005 hervorgeht. Der Erfindung liegt daher die Aufgabe zugrunde, ein Energieversorgungssystem der oben genannten Art und ein Verfahren zum Betrieb eines solchen Energieversorgungssystems vorzuschlagen, das die Energieeinspeisung aus mehreren Gleichspannungsquellen, z.B. aus einem Photovoltaikfeld, zur Versorgung von Drehstromverbrauchern auf einfache Weise ermöglicht.

Die Aufgabe wird zum einen durch ein Energieversorgungssystem mit den Merkmalen nach Anspruch 1 gelöst. Dabei ist an die Eingangsklemmen jeweils eine Schaltung angeschlossen, die mindestens eine Gleichspannungsquelle, einen zu dieser in Reihe geschalteten Wechselrichter zur Erzeugung einer ersten Wechselspannung sowie einen zum Wechselrichter in Reihe geschalteten HF-Umsetzer aufweist. Der HF-Umsetzer dient zur Hochsetzung der ersten Wechselspannung in eine zweite Wechselspannung und zur Veränderung der Frequenz der zweiten Wechselspannung gegenüber der ersten Wechselspannung um ein Vielfaches. Weiterhin ist eine Steuereinheit vorgesehen, die die bidirektionalen Schalter des Multiphasenmatrixumrichters sowie die HF-Umsetzer in Abhängigkeit von den Augenblickswerten von Strom und Spannung am Ausgang der Gleichspannungsquellen sowie in Abhängigkeit der am Ausgang der HF-Umsetzer anstehenden zweiten Wechselspannung ansteuert.

Die weitere das Verfahren betreffende Aufgabe wird mit den Merkmalen nach Anspruch 10 gelöst. Dabei werden die an den Ausgangsklemmen anstehenden sinusförmigen Wechselspannungen für die Phasen des Drehstromnetzes durch Spannungspulse unterschiedlicher Dauer und Höhe aus den an den Ausgängen der HF-Umsetzer anstehenden Wechselspannungen gebildet, indem die Steuereinheit die bidirektionalen Schalter derart ansteuert, dass die Spannungspulse auf die Ausgangsklemmen geleitet werden. Dabei werden die Dauer und Höhe der durchgeleiteten Spannungspulse durch die Steuereinheit nach Bedarf verändert.

Vorteilhafte Weiterbildungen der Erfindung sind den Unteransprüchen 2 bis 9 und 11 bis 13 zu entnehmen.

Eine vorteilhafte Weiterbildung der Erfindung besteht, wenn gemäß Anspruch 2 die Gleichspannungsquellen als Bereiche eines Photovoltaikfelds ausgeführt sind.

Weiterhin ist es vorteilhaft, wenn gemäß Anspruch 3 die Steuerung durch die Steuereinheit in Abhängigkeit von Wirk- und/ oder Blindleistungsvorgaben, z.B. eines Netzbetreibers, erfolgt.

Ein besonderer Vorteil besteht, wenn gemäß Anspruch 4 an den Ausgangsklemmen sinusförmige Wechselspannungen für die Phasen eines Drehstromnetzes anstehen, die durch Spannungspulse unterschiedlicher Dauer und Höhe gebildet sind und die ausgelöst durch die Steuereinheit von den bidirektionalen Schaltern auf die Ausgangsklemmen des Multiphasenmatrixumrichters geleitet werden, wobei die Dauer und Höhe der durchgeleiteten Spannungspulse durch die Steuereinheit veränderbar ist.

Gemäß den Ansprüchen 5 und 6 dient das Energieversorgungssystem zum Antrieb eines batteriebetriebenen Fahrzeugs wobei die Gleichspannungsquelle als Batterie ausgeführt ist.

Die Weiterbildungen des erfindungsgemäßen Verfahrens entsprechen den vorteilhaften Ausbildungen des erfindungsgemäßen Energieversorgungssystems.

Ein Ausführungsbeispiel der Erfindung wird im Folgenden anhand einer Zeichnung näher erläutert. Es zeigen:
- FIG 1: eine aus dem Stand der Technik bekannte Schaltungstopologie eines Energieversorgungssystems mit einem Matrixumrichter,
- FIG 2: die Schaltungstopologie eines erfindungsgemäßen Energieversorgungssystems mit einem Multiphasenmatrixumrichter,
- FIG 3: eine aus mehreren Spannungsblöcken gebildete Halbwelle einer sinusförmigen Wechselspannung und
- FIG 4: einen aus mehreren Spannungspulsen gebildeten Spannungsblock.

In FIG 1 ist eine aus dem Stand der Technik bekannte Schaltungstopologie eines Energieversorgungssystems mit einem Matrixumrichter dargestellt, wobei an der Eingangsseite der Matrixumrichter über die Leitungen L1, L2, L3 ein Drehstromnetz AC angeschlossen ist und die Ausgangsklemmen mit einem Motor MO verbunden sind. Dabei ist der Matrixumrichter vereinfachend mit Schaltelementen dargestellt, die in Realität als bidirektionale Schalter ausgeführt sind.

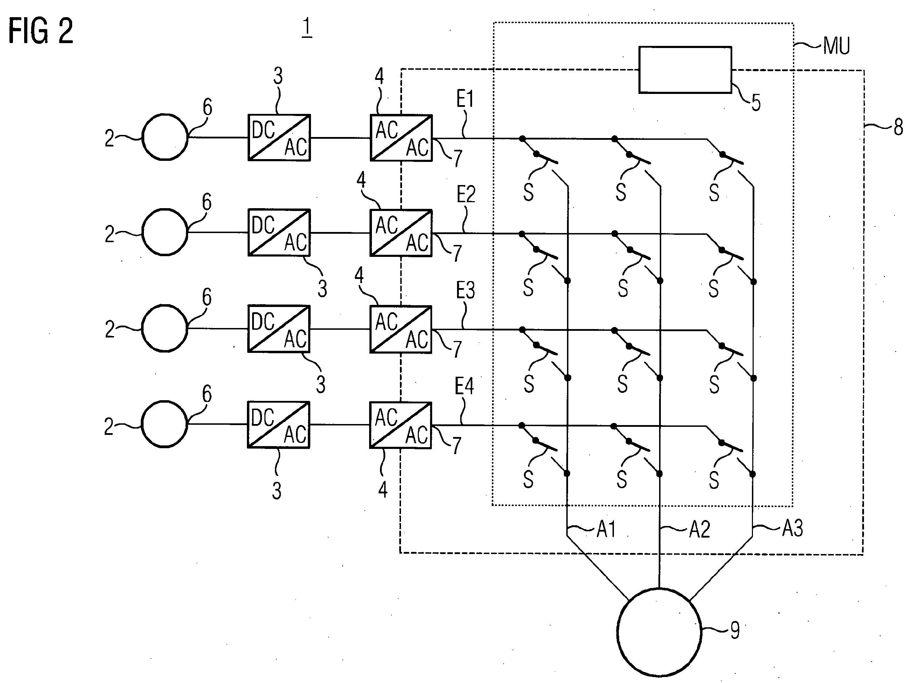

In FIG 2 ist ein erfindungsgemäßes Energieversorgungssystem 1 mit einem Multiphasenmatrixumrichter MU dargestellt, der mehrere Eingangsklemmen E1,E2,E3,E4, mehrere Ausgangsklemmen A1, A2, A3 und mehrere Teilumrichter aufweist. Die Eingangsklemmen E1,E2,E3,E4 sind jeweils über bidirektionale Schalter S der Teilumrichter mit den Ausgangsklemmen A1, A2, A3 verbunden, die hier an ein öffentliches Netz angeschlossen sind.

An die Eingangsklemmen E1,E2,E3,E4 ist jeweils eine Schaltung angeschlossen, die mindestens eine Gleichspannungsquelle 2, einen zu dieser in Reihe geschalteten Wechselrichter 3 zur Erzeugung einer ersten Wechselspannung, hier einer Rechteckspannung, sowie einen zum Wechselrichter 3 in Reihe geschalteten HF-Umsetzer 4 aufweist. Der Wechselrichter 3 ist mit lokalem, autarkem MPP-Tracking ausgeführt, wobei MPP Maximum Power Point bedeutet. Der HF-Umsetzer 4 dient zur Hochsetzung der ersten Wechselspannung in eine zweite Wechselspannung und zur Erhöhung der Frequenz der zweiten Wechselspannung gegenüber der Frequenz der ersten Wechselspannung um ein Vielfaches. Der Multiphasenmatrixumrichter MU umfasst eine Steuereinheit 5, die die bidirektionalen Schalter S des Multiphasenmatrixumrichters MU in Abhängigkeit der am Ausgang 7 der HF-Umsetzer 4 anstehenden zweiten Wechselspannung ansteuert. Hierzu ist die Steuereinheit 5 über eine Kommunikationsleitung 8 mit den HF-Umsetzern 4 verbunden. Bei Bedarf werden Strom und Spannung am Ausgang 6 der Gleichspannungsquellen 2 an die Steuereinheit 5 übertragen.

Der HF-Umsetzer 4 bezieht über die Steuereinheit 5 die Sollwerte für die Pulsform, die in einem lokalen Regelkreis im HF-Umsetzer 4 erzeugt wird. Im Multiphasenmatrixumrichter MU sind für alle zweiten Wechselspannungen am Ausgang der HF-Umsetzer 4 Messstellen vorhanden, die die Augenblicksspannungswerte an die Steuereinheit 5 liefern. Wenn hier die Sollwerte von den im Multiphasenmatrixumrichter MU gemessenen Werten abweichen, werden Parameter in der Steuereinheit 5 angepasst. Dies kann z.B. bei großen Kabellängen zwischen HF-Umsetzer 4 und dem Multiphasenmatrixumrichter MU nötig sein.

Beim Einsatz eines solchen Energieversorgungssystems 1 zur Einspeisung der durch ein Photovoltaikfeld bereitgestellten Energie in ein öffentliches Netz 9 dienen einzelne Bereiche des Photovoltaikfelds als Gleichspannungsquellen 2. Dabei kann eine beliebige Anzahl von Gleichspannungsquellen 2 zum Einsatz kommen.

Es können mehrere parallel geschaltete Einzelstränge des Photovoltaikfeldes als Gleichspannungsquelle 2 dienen. Weiterhin können auch mehrere Wechselrichter 3 den nachgeschalteten HF-Umsetzer 4 speisen.

Die sinusförmigen Wechselspannungen für die Phasen des Drehstromnetzes 9 werden dabei durch Spannungspulse unterschiedlicher Dauer und Höhe gebildet, die ausgelöst durch die Steuereinheit 5 von den bidirektionalen Schaltern S auf die Ausgangsklemmen A1,A2,A3 des Multiphasenmatrixumrichters MU geleitet werden. Die Dauer und Höhe der durchgeleiteten Spannungspulse ist durch die Steuereinheit 5 veränderbar ist.

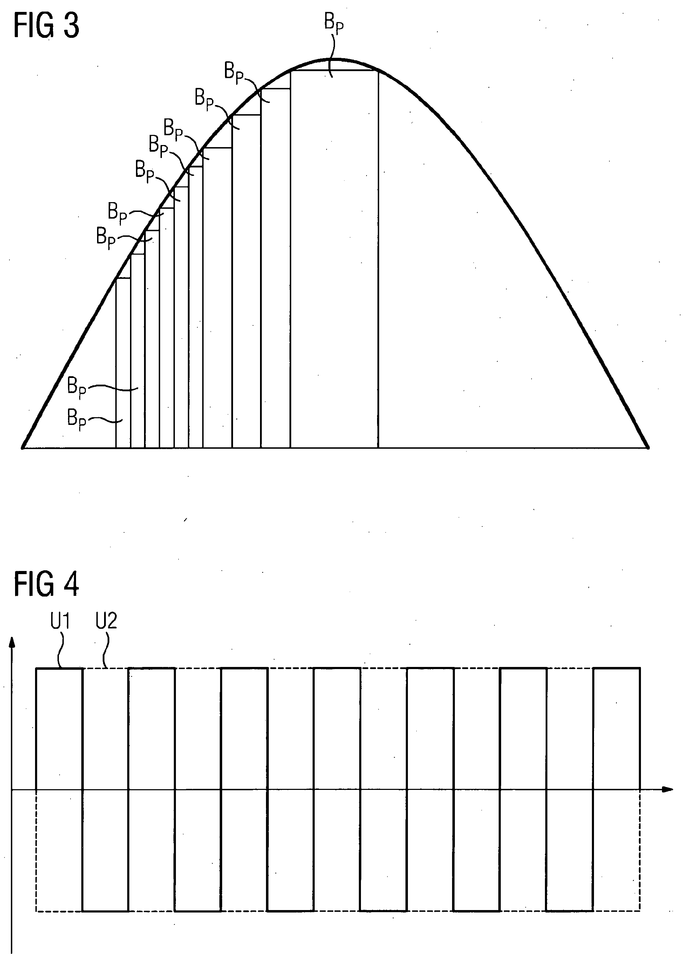

Dies wird beispielhaft anhand der FIG 3 und 4 erläutert. FIG 3 zeigt prinzipiell wie ein Abschnitt einer positiven Sinushalbwelle einer Wechselspannung durch positive Spannungsblöcke Bp unterschiedlicher Höhe und Breite nachgebildet werden kann. Diese Spannungsblöcke Bp für die positive Sinushalbwelle sind gemäß FIG 4 z.B. aus den positiven Einzelpulsen zweier Rechteckspannungen U1 und U2 zusammengesetzt, die dieselbe Amplitude und Frequenz haben, aber um 180 Grad phasenverschoben sind, wobei die beiden Rechteckspannungen von zwei HF-Umsetzern 4 generiert werden.

Bei Abschaltung eines Strangs in einem Photovoltaikfeld kann die Steuereinheit 5 durch einen adaptiven Algorithmus ein neues passendes Pulsmuster generieren und auf alle Umrichter verteilen, so dass der Multiphasenmatrixumrichter MU im optimalen Bereich arbeiten kann.

Durch die Steuereinheit 5 kann über den Multiphasenmatrixumrichter MU die an das Netz abgegebene Wirk- und/oder Blindleistung entsprechend den Vorgaben des Netzbetreibers gesteuert werden. Auch Vorgaben zur Netzqualität, z.B. zum Oberschwingungsgehalt, können von der Steuereinheit 5 durch entsprechende Steuerung umgesetzt werden.

Das Energieversorgungssystem 1 nach FIG 2 kann vorteilhaft auch für den Antrieb eines batteriebetriebenen Fahrzeugs genutzt werden. Die Batterien dienen hierbei als Gleichspannungsquellen und an die Ausgangsklemmen A1,A2,A3 des Multiphasenmatrixumrichters MU wird ein Elektromotor angeschlossen. Die HF-Umsetzer 4 und der Multiphasenmatrixumrichter MU werden in einem gemeinsamen Gehäuse als Modul gekapselt, das einen Berührungsschutz gegenüber den Anlagenteilen mit hoher Spannung bildet.

Zwischen jeder Batterie und dem dazu in Reihe geschalteten HF-Umsetzer 4 wird eine elektrische Trennstelle vorgesehen, die durch die Steuereinheit 5 nach Messung eines unfallbedingt hohen Beschleunigungswertes geöffnet werden. Die elektrische Trennstelle kann beispielsweise als elektromechanischer oder elektronischer Schalter ausgeführt werden.

Eine Veränderung der Gleichspannung am Ausgang einer Gleichspannungsquelle 2 oder der völlige Ausfall derselben, was eine Veränderung der Amplitude der zweiten Wechselspannung am Ausgang des nachgeschalteten HF-Umsetzers 4 zur Folge hat, wird durch angepasste Steuerung des HF-Umsetzers 4 und des Multiphasenmatrixumrichters MU ausgeglichen.

## Patentansprüche

1. Energieversorgungssystem (1) mit einem Multiphasenmatrixumrichter (MU), der mehrere Eingangsklemmen (E1,E2,E3,E4), mehrere Ausgangsklemmen (A1, A2, A3) und mehrere Teilumrichter aufweist, wobei die Eingangsklemmen (E1,E2,E3,E4) jeweils über bidirektionale Schalter (S) der Teilumrichter mit den Ausgangsklemmen (A1, A2, A3) verbunden sind, **dadurch gekennzeichnet, dass** an die Eingangsklemmen (E1,E2,E3,E4) jeweils eine Schaltung angeschlossen ist, die mindestens eine Gleichspannungsquelle (2), einen zu dieser in Reihe geschalteten Wechselrichter (3) zur Erzeugung einer ersten Wechselspannung sowie einen zum Wechselrichter in Reihe geschalteten HF-Umsetzer (4) aufweist, wobei der HF-Umsetzer (4) zur Hochsetzung der ersten Wechselspannung in eine zweite Wechselspannung und zur Veränderung der Frequenz der zweiten Wechselspannung gegenüber der Frequenz der ersten Wechselspannung um ein Vielfaches dient, und dass eine Steuereinheit (5) vorgesehen ist, die die bidirektionalen Schalter (S) des Multiphasenmatrixumrichters (MU) in Abhängigkeit der am Ausgang der HF-Umsetzer (4) anstehenden zweiten Wechselspannung ansteuert.

2. Energieversorgungssystem nach Anspruch 1, **dadurch gekennzeichnet, dass** die Gleichspannungsquellen (2) als Bereiche eines Photovoltaikfeldes ausgeführt sind.

3. Energieversorgungssystem nach Anspruch 1 oder 2, **dadurch gekennzeichnet, dass** die Steuerung durch die Steuereinheit (5) in Abhängigkeit von Wirk- und/oder Blindleistungsvorgaben, z.B. eines Netzbetreibers, erfolgt.

4. Energieversorgungssystem nach einem der vorangehenden Ansprüche, **dadurch gekennzeichnet, dass** an den Ausgangsklemmen (A1, A2, A3) sinusförmige Wechselspannungen für die Phasen eines Drehstromnetzes (9) anstehen, die durch Spannungspulse unterschiedlicher Dauer und Höhe gebildet sind und die ausgelöst durch die Steuereinheit (5) von den bidirektionalen Schaltern (S) auf die Ausgangsklemmen (A1,A2,A3) des Multiphasenmatrixumrichters (MU) geleitet werden, wobei die Dauer und Höhe der durchgeleiteten Spannungspulse durch die Steuereinheit (5) veränderbar ist.

5. Energieversorgungssystem nach einem der vorangehenden Ansprüche, **dadurch gekennzeichnet, dass** dieses zum Antrieb eines batteriebetriebenen Fahrzeugs dient.

6. Energieversorgungssystem nach Anspruch 5, **dadurch gekennzeichnet, dass** die Gleichspannungsquelle (2) als Batterie ausgeführt ist.

7. Energieversorgungssystem nach Anspruch 6, **dadurch gekennzeichnet, dass** an die Ausgangsklemmen (A1,A2,A3) des Multiphasenmatrixumrichters (MU) ein Elektromotor angeschlossen ist.

8. Energieversorgungssystem nach einem der Ansprüche 5 bis 7, **dadurch gekennzeichnet, dass** die HF-Umsetzer (4) und der Multiphasenmatrixumrichter (MU) in einem gemeinsamen Gehäuse als Modul gekapselt sind.

9. Energieversorgungssystem nach einem der Ansprüche 6 bis 8, **dadurch gekennzeichnet, dass** zwischen jeder Batterie und dem dazu in Reihe geschalteten HF-Umsetzer (4) eine elektrische Trennstelle vorgesehen ist.

10. Verfahren zum Betrieb eines Energieversorgungssystems nach einem der Ansprüche 1 bis 9, **dadurch gekennzeichnet, dass** die an den Ausgangsklemmen (A1, A2, A3) anstehenden sinusförmigen Wechselspannungen für die Phasen des Drehstromnetzes (9) durch Spannungspulse unterschiedlicher Dauer und Höhe aus den an den Ausgängen der HF-Umsetzer anstehenden Wechselspannungen gebildet werden, indem die Steuereinheit (5) die bidirektionalen Schalter (S) derart ansteuert, dass die Spannungspulse auf die Ausgangsklemmen (A1,A2,A3) geleitet werden, wobei die Dauer und Höhe der durchgeleiteten Spannungspulse durch die Steuereinheit (5) nach Bedarf verändert werden.

11. Verfahren nach Anspruch 10, **dadurch gekennzeichnet, dass** bei Veränderung der Gleichspannung am Ausgang (6) einer Gleichspannungsquelle (2), die eine Veränderung der Amplitude der zweiten Wechselspannung am Ausgang des nachgeschalteten HF-Umsetzers (4) zur Folge hat, durch angepasste Steuerung des HF-Umsetzers (4) und der bidirektionalen Schalter (S) ausgeglichen wird.

12. Verfahren nach Anspruch 10 oder 11, **dadurch gekennzeichnet, dass** die elektrischen Trennstellen durch die Steuerung nach Messung eines unfallbedingt hohen Beschleunigungswertes geöffnet werden.

13. Verfahren nach Anspruch 10 oder 12, **dadurch gekennzeichnet, dass** bei Ausfall einer Batterie der Elektromotor mit reduziertem Energievorrat durch die anderen Batterien des Kraftfahrzeugs betrieben wird.

## Claims

1. Power supply system (1) comprising a multiphase matrix converter (MU), comprising a plurality of input terminals (E1, E2, E3, E4), a plurality of output terminals (A1, A2, A3) and a plurality of sub-converters, wherein the input terminals (E1, E2, E3, E4) are each connected to the output terminals (A1, A2, A3) via bidirectional switches (S) of the sub-converters, **characterised in that** a circuit, which has at least one DC source (2), an inverter (3) connected in series with the latter to generate a first alternating voltage and an HF transformer (4) connected in series with the inverter, is connected to the input terminals (E1, E2, E3, E4) in each instance, wherein the HF transformer (4) is used to transform the first alternating voltage up into a second alternating voltage and to change the frequency of the second alternating voltage by a multiple as compared with the frequency of the first alternating voltage, and that a control unit (5) is provided, which activates the bidirectional switches (S) of the multiphase matrix converter (MU) as a function of the second alternating voltage present at the output of the HF transformer (4).

2. Power supply system according to claim 1, **characterised in that** the DC sources (2) are embodied as regions of a photovoltaic array.

3. Power supply system according to claim 1 or 2, **characterised in that** the control is carried out by the control unit (5) as a function of the active and/or reactive power specifications, e.g. of a system operator.

4. Power supply system according to one of the preceding claims, **characterised in that** sinusoidal alternating voltages for the phases of a three-phase system (9) are present at the output terminals (A1, A2, A3), said phases being formed by voltage pulses with a different duration and level and, triggered by the control unit (5), being routed from the bidirectional switches (S) to the output terminals (A1, A2, A3) of the multiphase matrix converter (MO), wherein the duration and level of the voltage pulses routed therethrough can be changed by the control unit (5).

5. Power supply system according to one of the preceding claims, **characterised in that** this is used to drive a battery-operated vehicle.

6. Power supply system according to claim 5, **characterised in that** the DC source (2) is embodied as a battery.

7. Power supply system according to claim 6, **characterised in that** an electric motor is connected to the output terminals (A1, A2, A3) of the multiphase matrix converter (MU).

8. Power supply system according to one of claims 5 to 7, **characterised in that** the HF transformer (4) and the multiphase matrix converter (MU) are encapsulated in a shared housing as a module.

9. Power supply system according to one of claims 6 to 8, **characterised in that** an electric disconnection point is provided between each battery and the HF transformer (4) connected in series thereto.

10. Method for operating a power supply system according to one of claims 1 to 9, **characterised in that** the sinusoidal alternating voltages present at the output terminals (A1, A2, A3) for the phases of the three-phase system (9) are formed by voltage pulses of a different duration and level from the alternating voltages present at the outputs of the HF transformer, by the control unit (5) actuating the bidirectional switches (S) such that the voltage pulses are routed to the output terminals (A1, A2, A3), wherein the duration and level of the voltage pulses routed therethrough are changed if necessary by the control unit (5).

11. Method according to claim 10, **characterised in that** when the DC voltage is changed at the output (6) of a DC source (2), which results in a change in the amplitude of the second alternating voltage at the output of the downstream HF transformer (4), this is compensated for by adjusted control of the HF transformer (4) and the bidirectional switch (S).

12. Method according to claim 10 or 11, **characterised in that** the electrical disconnection points are opened by the controller after measuring a high acceleration value caused by accident.

13. Method according to claim 10 or 12, **characterised in that** upon failure of a battery, the electric motor is operated with a reduced energy supply by the other batteries in the motor vehicle.

## Revendications

1. Système (1) d'alimentation en énergie comprenant un convertisseur (MU) multiphase de matrice, qui a plusieurs bornes (E1, E2, E3, E4) d'entrée, plusieurs bornes (A1, A2, A3) de sortie et plusieurs convertisseurs partiels, les bornes (E1, E2, E3, E4) d'entrée étant reliées respectivement aux bornes (A1, A2, A3) de sortie par des interrupteurs (S) bidirectionnels des convertisseurs partiels, **caractérisé en ce qu'**aux bornes (E1, E2, E3, E4) d'entrée sont raccordés respectivement un circuit, qui a au moins une source (2) de tension continue, un onduleur (3) monté en série avec celle-ci pour la production d'une première tension alternative, ainsi qu'un convertisseur HF (4) monté en série avec l'onduleur, le convertisseur HF (4) servant à élever la première tension alternative en une deuxième tension alternative et à modifier la fréquence de la deuxième tension alternative par rapport à la fréquence de la première tension alternative d'un multiple, et **en ce qu'**il est prévu une unité (5) de commande qui commande les interrupteurs (S) bidirectionnels du convertisseur (MU) multiphase de matrice en fonction de la deuxième tension alternative appliquée à la sortie du convertisseur HF (4).

2. Système (1) d'alimentation en énergie suivant la revendication 1, **caractérisé en ce que** les sources (2) de tension continue sont réalisées comme partie d'un champ photovoltaïque.

3. Système (1) d'alimentation en énergie suivant la revendication 1 ou 2, **caractérisé en ce que** la commande par l'unité (5) de commande s'effectue en fonction de prescriptions de puissance active et/ou réactive, par exemple d'un exploitant de réseau.

4. Système (1) d'alimentation en énergie suivant l'une des revendications précédentes, **caractérisé en ce qu'**il s'applique aux bornes (A1, A2, A3) de sortie des tensions alternatives sinusoïdales pour les phases d'un réseau (9) triphasé, qui sont formées par des impulsions de tension, de durée et d'amplitude différentes, et qui, déclenchées par l'unité (5) de commande, sont envoyées par les interrupteurs (S) bidirectionnels aux bornes (A1, A2, A3) de sortie du convertisseur (MU) multiphase de matrice, la durée et l'amplitude des impulsions de tension envoyées étant modifiables par l'unité (5) de commande.

5. Système (1) d'alimentation en énergie suivant l'une des revendications précédentes, **caractérisé en ce qu'**il sert à la traction d'un véhicule fonctionnant sur batterie.

6. Système (1) d'alimentation en énergie suivant la revendication 5, **caractérisé en ce que** la source (2) de tension continue est réalisée sous la forme d'une batterie.

7. Système (1) d'alimentation en énergie suivant la revendication 6, **caractérisé en ce qu'**un moteur électrique est raccordé aux bornes (A1, A2, A3) de sortie du convertisseur (MU) multiphase de matrice.

8. Système (1) d'alimentation en énergie suivant l'une des revendications 5 à 7, **caractérisé en ce que** le convertisseur HF (4) et le convertisseur (MU) multiphase de matrice sont encapsulés sous la forme d'un module dans un boîtier commun.

9. Système (1) d'alimentation en énergie suivant l'une des revendications 6 à 8, **caractérisé en ce qu'**un point de coupure électrique est prévu entre chaque batterie et le convertisseur HF (4) qui y est monté en série.

10. Procédé pour faire fonctionner un système d'alimentation en énergie suivant l'une des revendications 1 à 9, **caractérisé en ce que** l'on forme des tension alternatives sinusoïdales appliquées aux bornes (A1, A2, A3) de sortie pour les phases du réseau (9) triphasé par des impulsions, de tension de durée et d'amplitude différentes, à partir des tensions alternatives appliquées aux sorties du convertisseurs HF par le fait que l'unité (5) de commande commande les interrupteurs (S) bidirectionnels de manière à envoyer les impulsions de tension aux bornes (A1, A2, A3) de sortie, la durée et l'amplitude des impulsions de tension envoyées étant modifiées suivant les besoins par l'unité (5) de commande.

11. Procédé suivant la revendication 10, **caractérisé en ce qu'**une variation de la tension continue, à la sortie (6) d'une source (2) de tension continue, qui a pour conséquence une variation de l'amplitude de la deuxième tension alternative à la sortie du convertisseur HF (4) en aval, est compensée par une commande adaptée du convertisseur HF (4) et des interrupteurs (S) bidirectionnels.

12. Procédé suivant la revendication 10 ou 11, **caractérisé en ce que** l'on ouvre les points de coupure électrique par la commande après mesure d'une grande valeur d'accélération due à un accident.

13. Procédé suivant la revendication 10 ou 12, **caractérisé en ce que**, s'il se produit une défaillance d'une batterie, on fait fonctionner le moteur électrique à une réserve d'énergie réduite par les autres batteries du véhicule automobile.
